# EUROPEAN PATENT SPECIFICATION

(11) **EP 3 416 053 B1**
(45) Date of publication and mention of the grant of the patent: **02.03.2022**
(21) Application number: 18176368.1
(22) Date of filing: 06.06.2018
(51) Int. Cl.: G06F 9/451, G06F 9/445

(54) **IMAGE DISPLAY APPARATUS AND METHOD OF OPERATING THE SAME**
BILDANZEIGEVORRICHTUNG UND VERFAHREN ZUM BETRIEB DAVON
AFFICHEUR D'IMAGES ET SON PROCÉDÉ DE FONCTIONNEMENT

(30) Priority: 14.06.2017 KR 20170075015
(43) Date of publication of application: 19.12.2018
(73) Proprietor: Samsung Electronics Co., Ltd., Gyeonggi-do 16677 (KR)
(72) Inventor: LEE, Sin-wook, Seoul (KR); LEE, Tae-young, Gyeonggi-do (KR); HAHM, Cheul-hee, Gyeonggi-do (KR); CHAE, Ji-hun, Gyeonggi-do (KR)
(74) Representative: Appleyard Lees IP LLP

(56) References cited:
- WO-A1-2005/003967

## Description

### BACKGROUND

### 1. Field

The disclosure relates to an image display apparatus and a method of operating the same, and more particularly, to an image display apparatus capable of more rapidly executing an application and a method of operating the image display apparatus.

### 2. Description of Related Art

An internet-connected image display apparatus may receive data by using an internet network, and a user may use various applications installed in the image display apparatus. In addition, due to further developments in applications, use of large-size applications has increased. However, due to the increasing size of applications, the amount of computations required to execute the applications has also increased. Thus, after a user selects the application, a period of time taken to output an execution screen of the selected application may be increased. Accordingly, there is a demand for an apparatus and method for more rapidly executing an application. An example of a relevant prior art system is WO2005/003967 whereby a GUI interface may predict the next user input and execute a preparation portion of the GUI code for that predicted input.

### SUMMARY

According to the present invention there is provided an image display apparatus as in claim 1 and a method of operating an image display apparatus as in claim 11. Additional features will be apparent from the dependent claims and the discussion herein.

Provided is an image display apparatus that further efficiently uses a memory by selectively performing a rendering operation, in consideration of a possibility that an application is to be selected by a user, when the application is pre-executed, and a method of operating of the image display apparatus.

Additional aspects will be set forth in part in the description which follows and, in part, will be apparent from the description, or may be learned by practice of the presented embodiments.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an example of an image display apparatus, according to an embodiment;
FIG. 2 is a block diagram illustrating a configuration of an image display apparatus, according to an embodiment;
FIG. 3 is a block diagram illustrating a configuration of an image display apparatus, according to another embodiment;
FIG. 4 is a flowchart illustrating a method of pre-executing at least one application in a first mode state, according to an embodiment;
FIG. 5 is a flowchart illustrating a method of pre-executing an application in a second mode state, according to an embodiment;
FIG. 6 is a flowchart illustrating a process of changing an application from a second mode state to a first mode state, according to an embodiment;
FIG. 7 is a diagram illustrating a method of pre-executing an application in a first mode state or a second mode state, according to an embodiment;
FIGS. 8A to 8D are diagrams illustrating a method of operating the image display apparatus, according to an embodiment;
FIGS. 9A and 9B are diagrams illustrating a method of pre-executing a plurality of applications in a second mode state, according to an embodiment; and
FIG. 10 is a flowchart illustrating a method of operating the image display apparatus, according to an embodiment.

### DETAILED DESCRIPTION

Embodiments of the present disclosure will now be described more fully with reference to the accompanying drawings for one of ordinary skill in the art to be able to perform the present disclosure without any difficulty. The present disclosure may, however, be embodied in many different forms and should not be construed as being limited to the embodiments set forth herein. In addition, portions irrelevant to the description of the present disclosure will be omitted in the drawings for a clear description of the present disclosure, and like reference numerals will denote like elements throughout the specification.

All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. Thus, the terms used herein have to be defined based on the meaning of the terms together with the description throughout the specification.

The terms used herein are just for the purpose of describing particular embodiments and are not intended to limit the scope of the present disclosure. As used herein, the singular forms "a," "an," and "the" may include the plural forms as well, unless the context clearly indicates otherwise. Throughout the specification, it will also be understood that when an element is referred to as being "connected to" or "coupled with" another element, it can be directly connected to or coupled with the other element, or it can be electrically connected to or coupled with the other element by having an intervening element interposed therebetween. Also, when a part "includes" or "comprises" an element, unless there is a particular description contrary thereto, the part can further include other elements, not excluding the other elements.

The use of the terms "the" and similar referents in the context of describing the disclosure (especially in the context of the following claims) are to be construed to cover both the singular and the plural. In addition, the steps of all methods described herein can be performed in any suitable order unless otherwise indicated herein or otherwise clearly contradicted by context. The present disclosure is not limited by the steps described herein.

The expressions "some embodiments" or "an embodiment" recited throughout the specification do not necessarily indicate the same embodiment.

Some embodiments of the present disclosure may be described in terms of functional block components and various processing steps. Some or all of functional blocks may be realized by any number of hardware and/or software components configured to perform the specified functions. For example, the functional blocks of the present disclosure may employ various integrated circuit components which may carry out a variety of functions under the control of one or more microprocessors. In addition, for example, the functional blocks of the present disclosure may be implemented using any programming or scripting language. The functional blocks may be implemented in algorithms that execute on one or more processors. Furthermore, the present disclosure could employ any number of conventional techniques for electronics configuration, signal processing and/or control, data processing and the like. The words "mechanism", "element", "means", and "configuration" are used broadly and are not limited to mechanical or physical embodiments, but can include software routines in conjunction with processors, etc.

Furthermore, the connecting lines, or connectors shown in the various drawings presented are intended to represent exemplary functional relationships and/or physical or logical couplings between the various elements. It should be noted that many alternative or additional functional relationships, physical connections or logical connections may be present in a practical device.

As used herein, the term "and/or" includes any and all combinations of one or more of the associated listed items. Expressions such as "at least one of," when preceding a list of elements, modify the entire list of elements and do not modify the individual elements of the list.

Reference will now be made in detail to embodiments, examples of which are illustrated in the accompanying drawings.

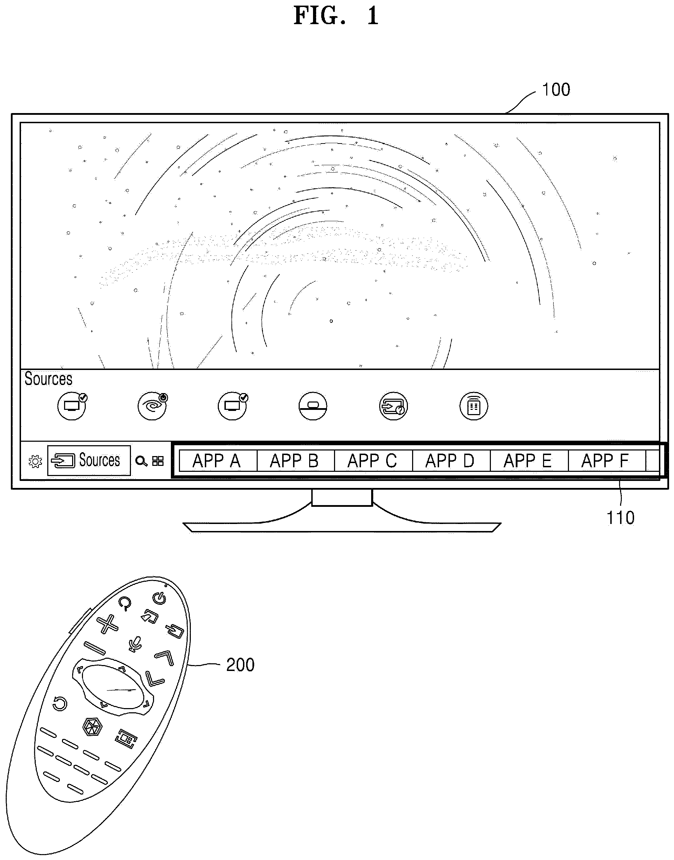

FIG. 1 illustrates an example of an image display apparatus 100, according to an embodiment.

Referring to FIG. 1, the image display apparatus 100 may be, but is not limited to, a television (TV), and may be embodied as an apparatus including a memory and a processor. For example, the image display apparatus 100 may be embodied as one of various image display apparatuses including a mobile phone, a tablet personal computer (PC), a digital camera, a camcorder, a laptop computer, a PC, a desktop computer, an electronic book (e-book) terminal, a terminal for digital broadcasting, a personal digital assistant (PDA), a portable multimedia player (PMP), navigation, an MP3 player, a wearable device, or the like. The image display apparatus 100 may be fixed or portable, and may be a digital broadcasting receiver configured to receive digital broadcasting.

The image display apparatus 100 may be embodied as an apparatus further including a display. The image display apparatus 100 may be embodied as not only a flat display apparatus but also embodied as a curved display apparatus whose screen is curved with a curvature, or a flexible display apparatus whose curvature is adjustable. Output definition of the image display apparatus 100 may be a high-definition (HD) class, a full HD class, an ultra HD class, or a definition class more clear than the ultra HD class.

The image display apparatus 100 may be controlled by a control device 200, and the control device 200 may be embodied as one of various devices configured to control the image display apparatus 100, the various devices including a remote controller, a mobile phone, or the like. Alternatively, in the case that a display of the image display apparatus 100 is embodied as a touchscreen, a finger of a user or an input pen may function as the control device 200.

The control device 200 may control the image display apparatus 100 by using short-range communication including infrared communication or Bluetooth communication. The control device 200 may control a function of the image display apparatus 100 by using at least one of at least one arranged key (including at least one button), a touchpad, a microphone configured to receive a user's voice, and a sensor configured to recognize a motion of the control device 200.

The control device 200 may include a power on/off button configured to turn on or off power of the image display apparatus 100. In addition, the control device 200 may perform, on the image display apparatus 100, switching of channels, adjustment of a volume level, selection from among terrestrial broadcasts, cable broadcasts, and satellite broadcasts, or environment setting. In addition, the control device 200 may be a pointing device. For example, when the control device 200 receives a specific key input, the control device 200 may function as a pointing device.

Throughout the specification, the term "user" may indicate a person who controls a function or an operation of the image display apparatus 100 by using the control device 200, and may include a viewer, a manager, or an installation engineer.

The user may select and execute at least one of applications installed in the image display apparatus 100. For example, the applications installed in the image display apparatus 100 may include, but is not limited to, an application for providing a video streaming service, an application for providing home shopping broadcasting content, an application for providing real-time broadcasting content, an application for providing a video on demand (VOD) service according to types of content, a social networking service (SNS) application, or the like.

The image display apparatus 100 may display, on a display of the image display apparatus 100, icons corresponding to the applications installed in the image display apparatus 100, and when an input of selecting a specific icon is received from the user, the image display apparatus 100 may execute an application corresponding to the selected icon. For example, the image display apparatus 100 may generate an engine process of performing operations to execute the selected application, and may perform a rendering operation of the selected application via the engine process. The rendering operation may include various graphic processing operations for outputting an execution screen of an application to the display. For example, the rendering operation may include, but is not limited to, an operation of parsing a code (e.g., a program code generated by using Hypertext Mark-up Language (HTML), Cascading Style Sheets (CSS), or JavaScript) of the application, an operation of generating a Document Object Model (DOM) tree and a layout tree, based on a result of parsing the code, an operation of generating a plurality of tile images used in the execution screen of the application, or the like. The rendering operation includes a process of generating and storing a plurality of images required in outputting the execution screen of the application to the display, and thus requires a relatively high-capacity memory in performing the rendering operation. Accordingly, a period of time taken for the image display apparatus 100 to perform the rendering operation and output the execution screen of the application to the display may be increased. Thus, in order to further rapidly execute the user-selected application, the image display apparatus 100 may pre-execute one or more applications before the user selects an application.

The pre-execution may indicate a process of pre-performing execution operations of an application and preparing an output so as to further rapidly output an execution screen of the application to the display. Because the pre-execution is performed before the application is selected and then is executed by the user, a result of the pre-execution is not output to the display. Thus, the pre-execution may include a process of performing operations that occur before the execution screen of the application is output to the display, the operations being from among operations that are performed when the user-selected application is executed. For example, when the application is selected and then is executed by the user, the image display apparatus 100 may store a result of performing the rendering operation in a buffer configured to store data to be output to the display, and may output the data to the display. Unlike to this case, when the application was pre-executed, the image display apparatus 100 may store the result of performing the rendering operation in a memory, and may stand by until the image display apparatus 100 receives a request for outputting the result of the rendering operation to the display. When an external input of selecting the application is received, the image display apparatus 100 may copy the result of performing the rendering operation, which is stored in the memory, to a buffer configured to store data to be output to the display, and may output the data stored in the buffer to the display.

The image display apparatus 100 may pre-execute a plurality of applications, and thus, may increase a probability that the user-selected application is to be included in the plurality of pre-executed applications. In this regard, a rendering operation from among operations for executing an application requires a relatively high-capacity memory. Thus, when the number of applications to be pre-executed is increased, an unnecessary memory use is also increased, thus, a function of the image display apparatus 100 may deteriorate. Thus, in order to increase a speed of outputting an execution screen of an operation by pre-executing the application and to prevent a function of the image display apparatus 100 from deteriorating, there is a demand for a method of efficiently using a memory required in pre-execution.

The image display apparatus 100 may divide a state of each of the applications to be pre-executed into two modes, and may selectively perform a rendering operation on an application selected based on a user input. For example, the image display apparatus 100 may not perform the rendering operation on all applications set to be pre-executed but may perform the rendering operation on one or more applications having a possibility of being selected and executed by the user. As described above, a relatively high-capacity memory is required in performing the rendering operation, Thus, the image display apparatus 100 may adjust the number of applications for which the rendering operation is performed, thereby efficiently managing the memory used in pre-executing an application.

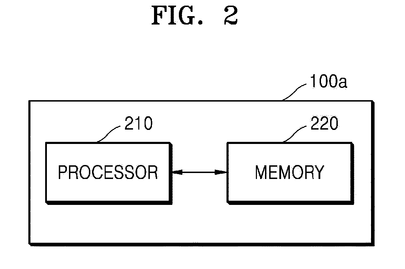

FIG. 2 is a block diagram illustrating a configuration of an image display apparatus 100a, according to an embodiment.

Referring to FIG. 2, the image display apparatus 100a may include a processor 210 and a memory 220. However, the image display apparatus 100a may be embodied with more or less elements than the elements shown in FIG. 2 and thus is not limited thereto.

Hereinafter, the elements will now be described below.

The processor 210 may be embodied in various combinations of at least one memory and at least one processor. For example, the memory 220 may generate and delete a program module, based on an operation of the processor 210, and the processor 210 may process operations of the program module.

The processor 210 according to the present embodiment may divide a state of an application to be pre-executed into two modes. For example, the processor 210 may divide the state of the application to be pre-executed to a first mode state in which operations other than a rendering operation from among operations for executing the application are performed, and a second mode state in which the rendering operation is performed. Then, the processor 210 may pre-execute an application in the second mode state, wherein the application has a possibility of being selected by a user from among one or more applications that were pre-executed in the first mode state.

The processor 210 may pre-execute, in the first mode state, one or more applications stored in the memory 220 by controlling operations other than the rendering operation from among operations for executing the one or more applications to be performed on the one or more applications. For example, the image display apparatus 100a may load an application code, may register a callback, and may set parameters required in executing an application, but the present embodiment is not limited thereto. For example, the callback may indicate a function that is called when a new situation occurs while the application is being executed.

The processor 210 may control a display of the image display apparatus 100a to display icons corresponding to a plurality of executable applications, and an order of displaying the icons on the display may vary according to embodiments. For example, the processor 210 may control the icons to be displayed on the display, based on installation orders of the applications or a user-set order, but the present embodiment is not limited thereto.

The processor 210 may determine, from among the plurality of executable applications, the preset number of applications to be pre-executed in the first mode state, the preset number of applications being selected based on an order of displaying icons on the display or a frequency of use of each of the executable applications. For example, the processor 210 may determine three applications to be pre-executed in the first mode state, the three applications corresponding to three icons from the left from among the icons displayed on the display. As another example, the processor 210 may determine three applications to be pre-executed in the first mode state, the three applications each having a high frequency of use from among the plurality of executable applications, but the present embodiment is not limited thereto.

In the case that a plurality of applications are set to be pre-executed in the first mode state, the processor 210 may control some applications to be pre-executed in the first mode state, based on a preset priority order, the some applications being from among the plurality of applications set to be pre-executed in the first mode state. In this regard, the processor 210 may control some applications to be pre-executed in the first mode state, based on a user-preference order, the some applications being from among the plurality of applications set to be pre-executed in the first mode state. Alternatively, the processor 210 may control some applications to be pre-executed in the first mode state, based on an order of larger computations with respect to pre-execution in the first mode, the some applications being from among the plurality of applications set to be pre-executed in the first mode state.

The processor 210 may preset a limit to a size of a memory for pre-execution of an application, thereby preventing an excessive memory use in pre-execution of the application. For example, the processor 210 may perform monitoring on the memory use, thereby checking whether the memory is used more than a threshold value when the application is being pre-executed in the first mode state, and in the case that the memory use is determined to be more than the threshold value, the processor 210 may discontinue pre-executing the application in the first mode state. In this regard, when that the application is currently being pre-executed in the first mode state, the processor 210 may discontinue pre-executing the application in the first mode state, regardless of whether the pre-execution of the application in the first mode state is completed or not. Alternatively, in another embodiment, after the pre-execution of the application in the first mode state is completed, the processor 210 may discontinue pre-executing the application in the first mode state.

The processor 210 may control at least one application to be pre-executed in the second mode state for performing the rendering operation, the at least one application being selected based on a user input from among the one or more applications that were pre-executed in the first mode state. For example, the processor 210 may change an application to the second mode state, the application corresponding to an icon on which a focus is positioned for more than a predetermined time and that is from among icons of the one or more applications that were pre-executed in the first mode state. Alternatively, when a focus is positioned at an icon corresponding to a user-preferred application from among the one or more applications that were pre-executed in the first mode state, the processor 210 may change the user-preferred application to the second mode state. For example, in the case that the user prefers a B application, when a focus is positioned at an icon corresponding to the B application, the processor 210 may not determine whether the focus is positioned at the icon corresponding to the B application longer than a predetermined time and may change the B application to the second mode state, but the present embodiment is not limited thereto.

The processor 210 may pre-execute at least one application set in the second mode state by performing the rendering operation on the at least one application set in the second mode state, the rendering operation including graphic processing operations for outputting an execution screen of the at least one application.

For example, when a focus is positioned at an icon corresponding to an A application longer than a predetermined time, the processor 210 may determine that the A application has a high probability of being selected by the user. Accordingly, the processor 210 may pre-execute, in the second mode state, the A application having the high probability of being selected by the user. When the A application is selected by the user, an execution screen of the A application may be further rapidly output to the display, based on a result of pre-executing the A application in the second mode state.

The processor 210 may change some applications to the second mode state, the some applications being from among the one or more applications that were pre-executed in the first mode state. For example, the processor 210 may change not only an application corresponding to an icon on which a focus is positioned for more than a predetermined time but may also change applications to the second mode state, the applications corresponding to one or more icons adjacent to the icon on which the focus is positioned for more than a predetermined time. For example, the processor 210 may change applications to the second mode state, the applications corresponding to icons in the left and right of the icon on which the focus is positioned for more than a predetermined time, but the present embodiment is not limited thereto.

The processor 210 may receive an external input of selecting an application from among one or more applications that were pre-executed in the second mode state. In addition, the processor 210 may control the display to output an execution screen of the selected application, based on a result of pre-executing the selected application in the second mode state. The rendering operation for an application that was pre-executed in the second mode state is already complete, and thus, the application may be in a standby mode in which an execution screen of the application is stood by to be output to the display. Thus, when the application that was pre-executed in the second mode state is selected by the user, the execution screen of the application may be further rapidly output to the display.

The memory 220 may include at least one storage medium from among a flash memory type storage medium, a hard disk type storage medium, a multimedia card micro type storage medium, a card-type memory (e.g., a secure digital (SD) memory, an xD memory, etc.), a random-access memory (RAM), a static random-access memory (SRAM), a read-only memory (ROM), an electrically erasable programmable read-only memory (EEPROM), a programmable read-only memory (PROM), a magnetic memory, a magnetic disc, and an optical disc.

The memory 220 may include a module including one or more instructions executed to pre-execute one or more applications in the first mode state by controlling operations excluding the rendering operation from among operations for executing the one or more applications to be performed on the one or more applications, and to pre-execute at least one application in the second mode state for performing the rendering operation, wherein the at least one application is selected based on a user input from among the one or more applications that were pre-executed in the first mode state, and wherein the rendering operation includes graphic processing operations for outputting an execution screen of the selected at least one application.

The memory 220 may store data generated when an application is pre-executed. For example, the memory 220 may store a result of pre-executing the application in the first mode state and a result of pre-executing the application in the second mode state. In addition, the memory 220 may store an execution screen of the application which is to be output to the display. For example, at least one section of the memory 220 may be used as a buffer to store data to be output to the display, and when a request for outputting the execution screen of the application to the display is received, the data stored in the buffer may be output to the display. When the rendering operation is performed, at least one section of the memory 220 may be allocated thereto and thus may store data and a plurality of images which are generated during the rendering operation.

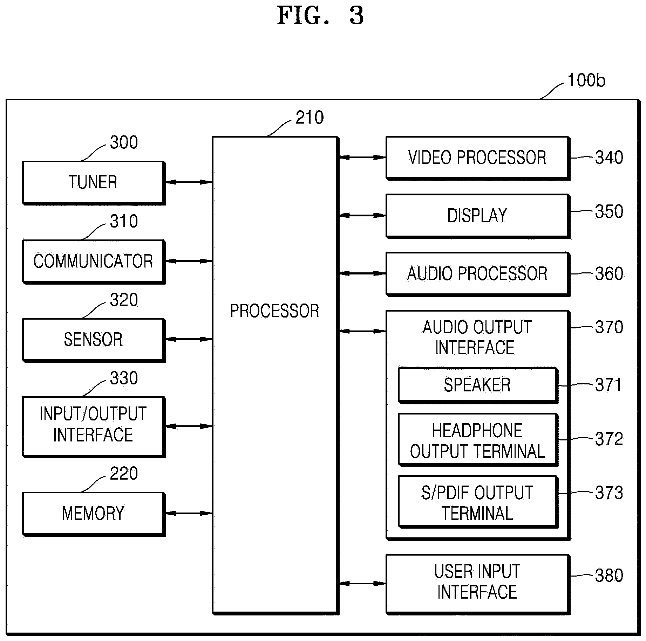

FIG. 3 is a block diagram illustrating a configuration of an image display apparatus 100b, according to another embodiment.

As illustrated in FIG. 2, the image display apparatus 100b may further include a tuner 300, a communicator 310, a sensor 320, an input/output interface 330, a video processor 340, a display 350, an audio processor 360, an audio output interface 370, and a user input unit 380, in addition to the processor 210 and the memory 220. Descriptions of the processor 210 and the memory 220 which are previously provided with reference to FIG. 2 are omitted in FIG. 3.

The tuner 300 may select a frequency of a channel the image display apparatus 100b attempts to receive from among many electric wave components by tuning the frequency through amplification, mixing, resonance, or the like with respect to a broadcast signal received in a wired or wireless manner. The broadcast signal may include audio, video, and additional information (for example, an electronic program guide (EPG)).

The tuner 300 may receive a broadcast signal in a frequency band corresponding to a channel number based on a user input (for example, a control signal received from the control device 200, such as a channel number input, a channel up-down input, and a channel input on an EPG screen).

The tuner 300 may receive a broadcast signal from various sources such as terrestrial broadcasts, cable broadcasts, satellite broadcasts, Internet broadcasts, and the like. The tuner 300 may also receive a broadcast signal from a source such as analog broadcasts, digital broadcasts, or the like. The broadcast signal received via the tuner 300 is decoded (e.g., audio decoding, video decoding, or additional information decoding) and then is divided into audio, video, and/or additional information. The divided audio, video, and/or additional information may be stored in the memory 220 by the control of the processor 210.

The image display apparatus 100b may include one or more tuners 300. The tuner 300 and the image display apparatus 100b may be embodied as an all-in-one type apparatus, the tuner 300 may be embodied in a separate device (e.g., a set-top box) having a tuner electrically connected to the image display apparatus 100b, or the tuner 300 may be embodied as a tuner connected to the input/output interface 330.

The communicator 310 may connect the image display apparatus 100b with an external device (e.g., an audio device, etc.) by the control of the processor 210. The processor 210 may transmit/receive contents to/from the external device connected through the communicator 310, may download an application from the external device, or may browse the web. The communicator 310 may include one of wireless local area network (WLAN) and Ethernet, according to capability and structure of the image display apparatus 100b.

The communicator 310 may include a combination of WLAN, Bluetooth, and wired Ethernet. The communicator 310 may receive a control signal of the control device 200 by the control of the processor 210. The control signal may be a Bluetooth type signal, a radio frequency (RF) type signal, or a Wi-Fi type signal. The communicator 310 may further include short-range communication (e.g., near-field communication (NFC), Bluetooth Low Energy (BLE), etc.) in addition to Bluetooth.

The sensor 320 may sense a voice of the user, an image of the user, or an interaction of the user, and may include a microphone, a camera, and a light receiver.

The microphone receives an uttered voice of the user. The microphone may convert the received voice into an electric signal and may output the electric signal to the processor 210. The voice of the user may include a voice corresponding to a menu or a function of the image display apparatus 100b.

The camera may receive an image (e.g., sequential frames) corresponding to a motion of the user which includes a gesture within a recognition range of the camera. The processor 210 may select a menu displayed on the image display apparatus 100b or may perform a control corresponding to a result of recognizing the motion, by using the received result of recognizing the motion. For example, the control may include channel up/down, volume adjustment, indicator movement, cursor movement, or the like.

The light receiver receives a light signal (including a control signal) received from an external control device through a lighting window of a bezel of the display 350. The light receiver may receive the light signal corresponding to a user input (for example, a touch, a press, a touch gesture, a voice, or a motion) from the external control device. The control signal may be extracted from the received light signal by the control of the processor 210.

The input/output interface 330 receives, by the control of the processor 210, a video (e.g., a moving picture, etc.), an audio (e.g., voice, music, etc.), additional information (e.g., an EPG, etc.), or the like from an external source of the image display apparatus 100b. The input/output interface 330 may include one of a High-Definition Multimedia Interface (HDMI) port, a component jack, a PC port, and a universal serial bus (USB) port. The input/output interface 330 may include a combination of the HDMI port, the component jack, the PC port, and the USB port.

The processor 210 may control general operations of the image display apparatus 100b and flows of signals between internal elements of the image display apparatus 100b, and may process data of the image display apparatus 100b. In the case that a user input is received or a preset and stored condition is satisfied, the processor 210 may execute an operating system (OS) and various applications stored in the memory 220.

The video processor 340 may process image data to be displayed on the display 350, and may perform various image processing operations including a decoding operation, a rendering operation, a scaling operation, a noise filtering operation, frame rate conversion, resolution conversion, etc., with respect to the image data.

The display 350 may display the image data processed by the video processor 340.

The display 350 according to the present embodiment may output an execution result with respect to an application selected by the user, the application being from among applications that were pre-executed in the second mode state. In addition, the display 350 may display icons corresponding to a plurality of applications installed in the image display apparatus 100b.

The display 350 may display a video included in the broadcast signal received via the tuner 300, by the control of the processor 210. Also, the display 350 may display content (e.g., a moving picture) input via the communicator 310 or the input/output interface 330. The display 350 may output an image stored in the memory 220, by the control of the processor 210. Also, the display 350 may display a voice user interface (Ul) (e.g., a voice instruction guide) for performing a voice recognition task corresponding to voice recognition, or a motion UI (e.g., a user motion guide for motion recognition) for performing a motion recognition task corresponding to motion recognition.

When the display 350 is embodied as a touchscreen, the display 350 may be used as both an output device and input device. The display 350 may include at least one of liquid crystal display (LCD), a thin film transistor-liquid crystal display (TFT-LCD), an organic light-emitting diode (OLED) display, a flexible display, a three-dimensional (3D) display, and an electrophoretic display.

According to a type of the image display apparatus 100b, the image display apparatus 100b may include at least two displays 350.

The audio processor 360 performs processing on audio data. The audio processor 360 may perform various processing operations including a decoding operation, an amplification operation, a noise filtering operation, or the like on the audio data. The audio processor 360 may include a plurality of audio processing modules configured to process a plurality of items of audio data corresponding to a plurality of items of content.

The audio output interface 370 outputs, by the control of the processor 210, audio included in the broadcast signal that is received by the tuner 300. The audio output interface 370 may output audio (e.g., voice or a sound) that is input via the communicator 310 or the input/output interface 330. Also, the audio output interface 370 may output, by the control of the processor 210, audio stored in the memory 220. The audio output interface 370 may include at least one of a speaker 371, a headphone output terminal 372, and a Sony/Philips Digital Interface Format (S/PDIF) output terminal 373. The audio output interface 370 may include a combination of the speaker 371, the headphone output terminal 372, and the S/PDIF output terminal 373.

The user input interface 380 refers to a unit through which the user inputs data to control the image display apparatus 100b. For example, the user input interface 380 may include, but is not limited to, a key pad, a dome switch, a touch pad (a touch capacitive type touch pad, a pressure resistive type touch pad, an infrared beam sensing type touch pad, a surface acoustic wave type touch pad, an integral strain gauge type touch pad, a piezo effect type touch pad, or the like), a jog wheel, and a jog switch.

For example, the user input may include an input of moving a position of a focus, an input of selecting an icon on which the focus is currently positioned, and the like. In the case in which the user input interface 380 is formed as a keypad or a dome switch, the user input of moving the position of the focus may indicate an input of clicking or pressing a key corresponding to a specific direction. In the case in which the user input unit 380 is formed as a touchpad, the user input may indicate, but is not limited to, an input of touching a key corresponding to a specific direction.

The user input interface 380 may be an element of the control device 200 or an element of the image display apparatus 100b.

The block diagrams of the image display apparatuses 100a and 100b shown in FIGS. 2 and 3 are block diagrams for an embodiment. Elements of the block diagram may be integrated, added, or omitted based on the specifications of the image display apparatuses 100a and 100b implemented actually. For example, when necessary, two or more elements may be integrated into one element or one element may be divided into two or more elements. A function executed in each element is intended to describe embodiments, and a detailed operation or apparatus thereof does not limit the scope of the present disclosure.

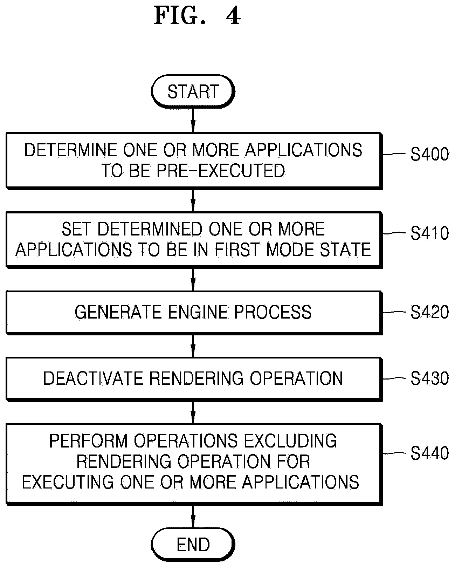

FIG. 4 is a flowchart of a method of pre-executing at least one application in a first mode state, according to an embodiment.

In operation S400, the image display apparatus 100 may determine one or more applications to be pre-executed from among applications installed in the image display apparatus 100. The image display apparatus 100 may include the image display apparatuses 100a and 100b shown in FIGS. 2 and 3.

The image display apparatus 100 may display, on the display 350, icons corresponding to the applications installed in the image display apparatus 100. For example, the image display apparatus 100 may display the icons corresponding to the applications on the display 350, based on installation orders of the applications or a user-set order, but the present embodiment is not limited thereto.

For example, the image display apparatus 100 may determine applications to be pre-executed, the applications corresponding to the preset number of icons from the left, based on a display order of the icons on the display 350. Alternatively, the image display apparatus 100 may determine applications to be pre-executed, based on an order of high user-preferences, by tracking the applications that are frequently used by the user. For example, the image display apparatus 100 may store information about a usage history of each application, and may check an application having a high user-preference, based on the stored information. However, the method of pre-executing at least one application may vary according to embodiments and thus is not limited to the present embodiment.

In operation S410, the image display apparatus 100 may set the one or more applications, which are determined in operation S400, to be in a first mode state. For example, the image display apparatus 100 may set the one or more applications to be pre-executed in the first mode state. Then, the image display apparatus 100 may determine, based on a user input, at least one application to be pre-executed in a second mode state for performing a rendering operation, the at least one application being from among the one or more applications that were pre-executed in the first mode state.

In operation S420, the image display apparatus 100 may generate an engine process for each of the one or more applications set in the first mode state. The engine process may indicate a software module configured to interpret an application code and to perform operations for generating an execution screen of an application to be output to the display 350, and may execute one or more instructions stored in the memory 220. The image display apparatus 100 may perform operations for executing the application by using the engine process, the operations including interpreting the application code, generating a DOM tree and a layout tree, performing JavaScript, or the like. The operations performed via the engine process are not limited to the aforementioned example and thus may vary according to embodiments.

In operation S430, the image display apparatus 100 deactivates the rendering operation so as to pre-execute the one or more applications in the first mode state. For example, the image display apparatus 100 deactivates the rendering operation by not allocating a memory necessary to perform the rendering operation or by setting a 1×1 size of a window to be output to a screen.

A size of an execution screen of an application to be output to the display 350 may vary according to applications. Accordingly, when the image display apparatus 100 performs the rendering operation on each application, the image display apparatus 100 generates a window corresponding to a size of an execution screen of each application. For example, in the case in which a size of an execution screen of an application to be output to the display 350 is 1920x1080, the image display apparatus 100 generates a window having a 1920x1080 size, and performs the rendering operation based on the generated size of the window. In this regard, when a size of a window is set to be 1x1, the image display apparatus 100 determines that the window for which the rendering operation is to be performed is not normally generated, and does not perform the rendering operation. However, a method, performed by the image display apparatus 100, of deactivating the rendering operation is not limited to the aforementioned example and thus may vary according to embodiments.

In operation S440, the image display apparatus 100 may perform operations excluding the rendering operation from among the operations for executing the one or more applications. For example, the image display apparatus 100 may load the application code, may register a callback, and may set parameters necessary to execute the one or more applications, but the present embodiment is not limited thereto. Also, the image display apparatus 100 may store a result of the pre-execution in the first mode state in the memory 220, and may pre-execute, by using the result stored in the memory 220, the at least one application in the second mode state, wherein a state of the at least one application is changed from the first mode state to the second mode state.

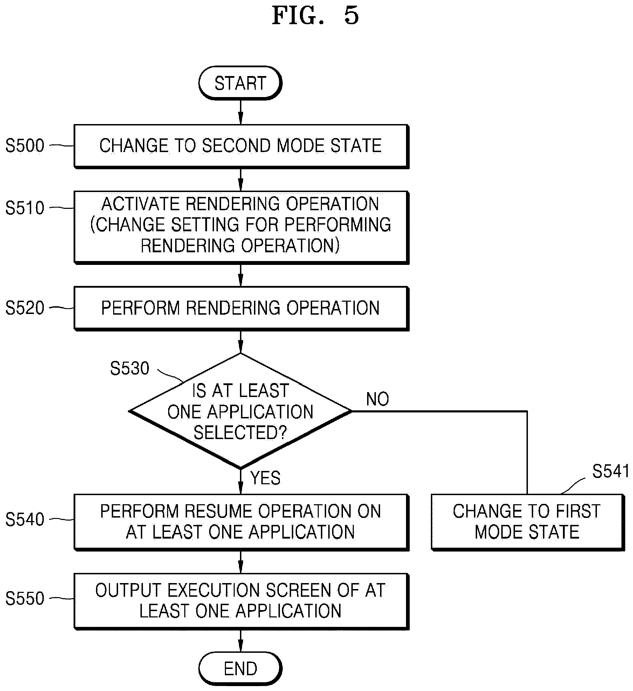

FIG. 5 is a flowchart of a method of pre-executing an application in a second mode state, according to an embodiment.

In operation S500, the image display apparatus 100 may detect a movement of a focus, and may change, based on a result of the detection, at least one application to the second mode state, the at least one application being from among applications that were pre-executed in a first mode state. For example, the image display apparatus 100 may change an application to the second mode state, the application corresponding to an icon on which the focus is positioned for more than a predetermined time (e.g., at least 1 second). When the focus is positioned at the icon longer than a predetermined time, the image display apparatus 100 may determine that an application corresponding to the icon has a relatively high probability of being selected by a user. Thus, the image display apparatus 100 may change the application to the second mode state, the application having the high probability with respect to the selection.

In operation S510, the image display apparatus 100 activates a rendering operation so as to pre-execute the at least one application in the second mode state, wherein the at least one application was changed to the second mode state. For example, the image display apparatus 100 changes the size of the window to be output to the screen from 1x1 to a size of an execution screen of the at least one application. For example, in the case in which a size of the execution screen of the at least one application is 1920x1080, the image display apparatus 100 sets the size of the window to be 1920x1080, and performs the rendering operation based on the set size of the window.

In operation S520, the image display apparatus 100 may perform the rendering operation by using a result of the pre-execution in the first mode state. For example, the rendering operation may include, but is not limited to, an operation of parsing an application code, an operation of generating a structure such as a DOM tree and a layout tree, an operation of generating a plurality of tile images, or the like. The image display apparatus 100 may store, in the memory 220, the DOM tree, the layout tree, and the plurality of tile images which are generated when the rendering operation is performed.

In another embodiment, the at least one application that is pre-executed in the second mode state may be plural in number. When the number of applications that are pre-executed in the second mode state is increased, a probability that a user-selected application is to be included in the applications that are pre-executed in the second mode state is increased. However, when the number of applications that are pre-executed in the second mode state is increased, a memory use for the pre-execution is also increased. Thus, a function of the image display apparatus 100 may deteriorate. Thus, the image display apparatus 100 may preset a limit to the memory use for the pre-execution, thereby preventing the memory use from exceeding the limit in the pre-execution.

In operation S530, the image display apparatus 100 may detect whether an external input of selecting the at least one application that was pre-executed in the second mode state is received. For example, the external input of selecting the at least one application that was pre-executed in the second mode state may be received from the control device 200, and in the case in which the display 350 of the image display apparatus 100 is embodied as a touchscreen, the external input may indicate an input of touching an icon corresponding to the at least one application.

In operation S540, the external input of selecting the at least one application that was pre-executed in the second mode state is received, the image display apparatus 100 may perform a resume operation. For example, the resume operation may refer to an operation of changing an application to an active state, wherein the application is in a pause state after the application was executed at least once. The at least one application that was pre-executed in the second mode state may have a state in which the rendering operation is completed, and thus, an execution screen of the at least one application is generated. Thus, after the at least one application is pre-executed in the second mode state, when the external input of selecting the at least one application that was pre-executed in the second mode state is received, the image display apparatus 100 may reactivate the selected at least one application by performing a resume operation on the selected at least one application. Accordingly, the image display apparatus 100 may perform operations for outputting, to the display 350, a result of pre-executing the selected at least one application in the second mode state. For example, the image display apparatus 100 may generate an event (e.g., a visibility change event) for changing the execution screen of the selected at least one application from a non-output state to an output state. In response to the generation of the event, the image display apparatus 100 may perform an operation of checking whether the generated tile images are output and updating the DOM tree and the layout tree, but the present disclosure is not limited thereto.

In operation S550, the image display apparatus 100 may output the execution screen of the selected at least one application to a display. Because the rendering operation for the selected at least one application was already executed, the image display apparatus 100 may further rapidly output the execution screen of the selected at least one application.

In operation S541, in the case in which the at least one application that was pre-executed in the second mode state is not selected by the user and the focus is moved to another icon, the image display apparatus 100 may change the at least one application that was pre-executed in the second mode state to the first mode state. Because the at least one application is changed to the first mode state, a memory used in performing the rendering operation may be released.

The image display apparatus 100 may further efficiently manage the memory used in pre-executing an application, by selectively performing a rendering operation on the application having a high possibility of being selected by the user, in consideration of a position of the focus and a movement of the focus.

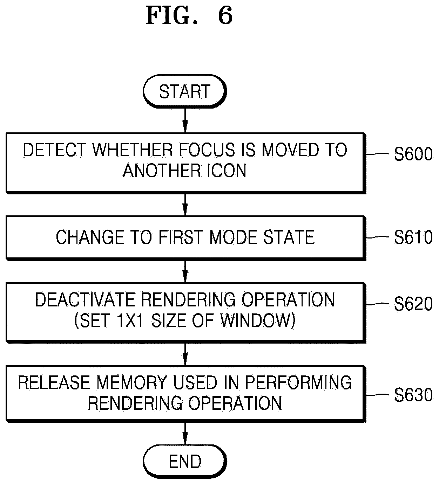

FIG. 6 is a flowchart of a process of changing an application from a second mode state to a first mode state, according to an embodiment.

In the case that the application that was pre-executed in the second mode state is not selected by a user and a focus is moved to another icon, the image display apparatus 100 may change again the application that was pre-executed in the second mode state to the first mode state.

In operation S600, the image display apparatus 100 may detect whether the focus is moved from an icon to another icon, the icon corresponding to the application that was pre-executed in the second mode state. When the focus is moved to the other icon, a possibility that an application corresponding to an icon on which the focus is not positioned is to be selected by the user is decreased, thus, the image display apparatus 100 may change again the application to the first mode state. Then, the image display apparatus 100 may determine again an application to be pre-executed in the second mode state, based on a changed position of the focus.

In operation S610, when the image display apparatus 100 detects that the focus is moved to the other icon, the image display apparatus 100 may change the application that was pre-executed in the second mode state to the first mode state.

In operation S620, the image display apparatus 100 may deactivate a rendering operation with respect to the application that is changed to the first mode state. For example, the image display apparatus 100 may set a 1x1 size of a window to be output to a screen or may not allocate a memory necessary to perform the rendering operation.

In operation S630, the image display apparatus 100 may release the memory used in performing the rendering operation on the application that is changed from the second memory state to the first memory state. The image display apparatus 100 may efficiently manage the memory used in pre-execution by changing the application from the second mode state to the first mode state and releasing the memory used in the rendering operation, wherein a possibility that the application is to be selected by the user is relatively decreased due to a change in a position of the focus.

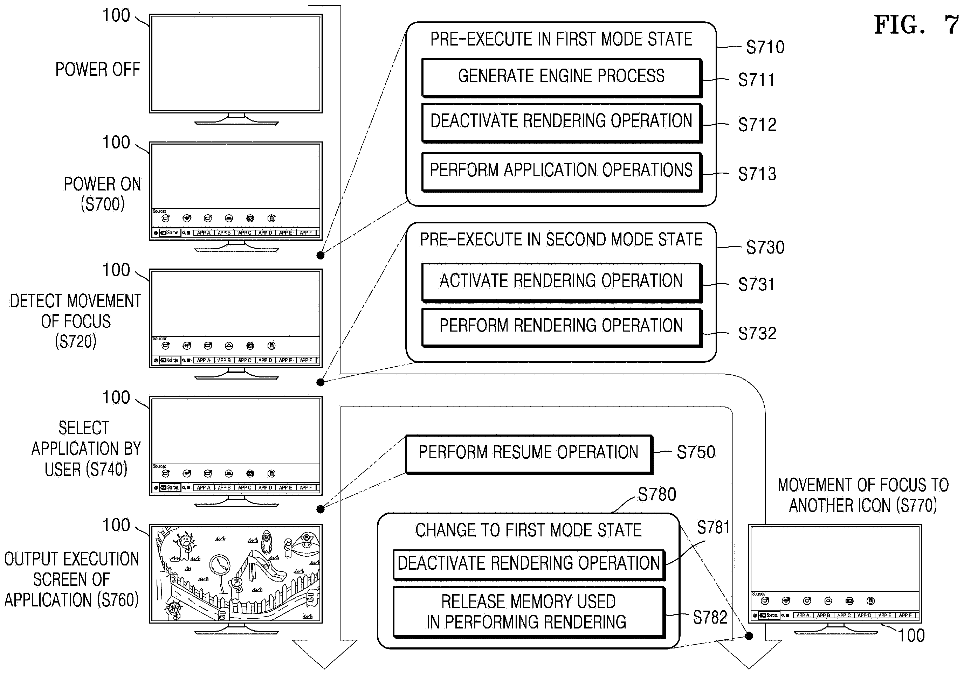

FIG. 7 is a diagram for describing a method of pre-executing an application in a first mode state or a second mode state, according to an embodiment.

When the image display apparatus 100 is changed from a power off state to a power on state (S700), the image display apparatus 100 may pre-execute one or more pre-execution target applications in the first mode state (S710). In the case of instant on, even if the image display apparatus 100 is changed from the power off state to the power on state, data stored in the memory 220 is not lost. Thus, a result of pre-execution that is performed in the first mode state before the power off state is maintained in the memory 220, so that it is not necessary for the image display apparatus 100 to perform again the pre-execution in the first mode state. In the case of cold booting, the memory 220 is reset when the image display apparatus 100 is changed from the power off state to the power on state. Thus, the result of pre-execution that is performed in the first mode state before the power off state is not maintained in the memory 220. Thus, when the image display apparatus 100 is changed from the power off state to the power on state via cold booting, the image display apparatus 100 may pre-execute the one or more pre-execution target applications in the first mode state.

When the image display apparatus 100 pre-executes the one or more pre-execution target applications in the first mode state (S710), the image display apparatus 100 may generate an engine process for each of the one or more pre-execution target applications (S711). As described above, the engine process may indicate a software module configured to interpret an application code and to perform operations for generating an execution screen of an application to be output to the display 350, and may execute one or more instructions stored in the memory 220.

The image display apparatus 100 may pre-execute the one or more applications in the first mode state via the generated engine process. When the pre-execution is performed in the first mode state, a rendering operation is not performed. Thus, the image display apparatus 100 may deactivate the rendering operation (S712) and may perform operations excluding the rendering operation from among operations for executing an application (S713).

The image display apparatus 100 may detect a movement of a focus (S720), and may determine at least one application to be pre-executed in a second mode state from among the one or more applications that were pre-executed in the first mode state. For example, the image display apparatus 100 may detect whether the focus is positioned at one icon longer than a predetermined time. The image display apparatus 100 may determine that an application corresponding to the icon on which the focus is positioned for more than a predetermined time has a high possibility of being selected by a user. Accordingly, the image display apparatus 100 may change the application to the second mode state, the application corresponding to the icon on which the focus is positioned for more than a predetermined time.

The image display apparatus 100 may pre-execute the at least one application in the second mode state, the application being changed to the second mode state (S730). The image display apparatus 100 may activate a rendering operation of the at least one application to be pre-executed in the second mode state (S731), and may perform the rendering operation of the at least one application (S732). For example, the image display apparatus 100 may activate the rendering operation by setting a size of a window, based on a size of an execution screen of the at least one application, or allocating a memory necessary for the rendering operation, but the present disclosure is not limited thereto. The image display apparatus 100 may store a result of the pre-execution in the second mode state in the memory 220 until a request for outputting, to the display 350, the execution screen of the at least one application that is pre-executed in the second mode state is received.

The image display apparatus 100 may receive an external input of selecting one of the at least one application that was pre-executed in the second mode state (S740). The image display apparatus 100 may perform a resume operation on the selected application (S750). Also, the image display apparatus 100 may output an execution screen of the selected application to the display 350, based on a result of the pre-execution in the second mode state (S760). For example, the image display apparatus 100 may generate an event (e.g., a visibility change event) for changing the execution screen of the selected application from a non-output state to an output state. Then, the image display apparatus 100 may perform operations for outputting the execution screen of the selected application via an engine process corresponding to the selected application. For example, the image display apparatus 100 may perform an operation of updating a structure such as a DOM tree and a layout tree, an operation of updating the execution screen of the selected application, or the like, based on a result of performing the pre-execution on the selected application in the second mode state, but the present disclosure is not limited thereto.

However, when an external input of moving a position of the focus is received (S770), the image display apparatus 100 may change the application to the first mode state, the application corresponding to the icon on which the focus was positioned (S780).

When the application that was in the second mode state is changed to the first mode state, the image display apparatus 100 may deactivate the rendering operation (S781) and may release a memory used in performing the rendering operation (S782). Thus, the image display apparatus 100 may flexibly determine an application to be pre-executed in the second mode state, in consideration of a movement of the focus, and thus may efficiently manage the memory used in pre-execution.

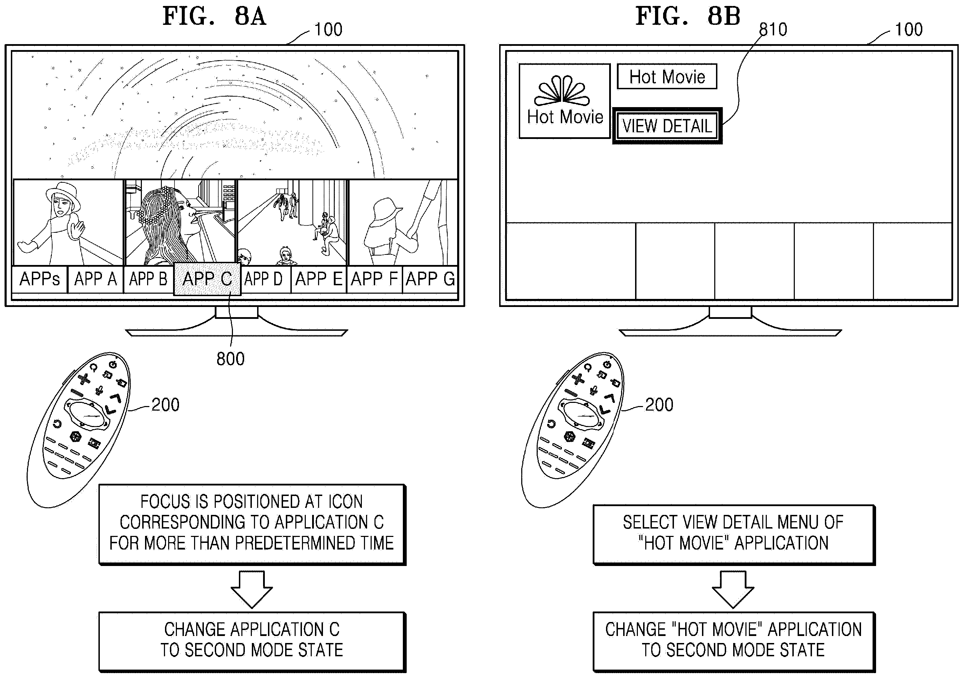

FIGS. 8A and 8B are diagrams for describing a method of operating the image display apparatus 100, according to an embodiment.

The image display apparatus 100 may display, on the display 350, icons corresponding to applications installed in the image display apparatus 100. For example, referring to FIG. 8A, the image display apparatus 100 may display a list of the icons corresponding to the installed applications. A user may scan the icons in the list by using the control device 200, and may select an icon and may execute an application corresponding to the selected icon.

In the case in which a focus is positioned at an icon longer than a predetermined time, the image display apparatus 100 may determine that an application corresponding to the icon has a relatively high probability of being selected by the user. For example, referring to FIG. 8A, the image display apparatus 100 may detect that the focus is positioned at an icon 800 longer than a predetermined time (e.g., 1 second), the icon 800 corresponding to an application C. In this regard, the image display apparatus 100 may determine that the application C has a relatively high probability of being selected by the user, and may change the application C to a second mode state. Then, the image display apparatus 100 may pre-execute the application C in the second mode state.

As another example, referring to FIG. 8B, the user may be interested in an application named "Hot Movie" which provides various items of movie content. Accordingly, the user may select a "view detail" menu 810 of the "Hot Movie" application. For example, when an external input of selecting the "view detail" menu 810 of the "Hot Movie" application is received via the control device 200, the image display apparatus 100 may determine that the "Hot Movie" application has a relatively high probability of being selected by the user, and may pre-execute the "Hot Movie" application in the second mode state.

The image display apparatus 100 may change an application, which was pre-executed in the second mode state, to a first mode state, based on a position of the focus and a movement of the focus.

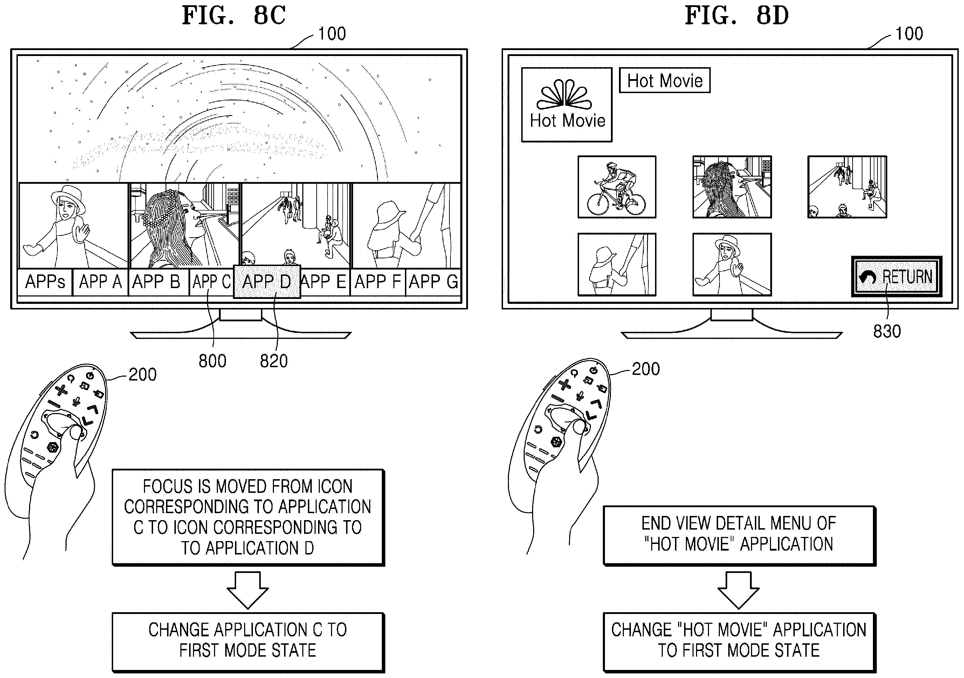

For example, referring to FIG. 8C, when the focus is moved from the icon 800, which corresponds to the application C, to an icon 820 corresponding to an application D, the image display apparatus 100 may determine that the application C has a relatively low probability of being selected by the user. In this regard, the image display apparatus 100 may receive, via the control device 200, an external input of moving the focus from the icon 800 corresponding to the application C to the icon 820 corresponding to the application D. The image display apparatus 100 may change the application C from the second mode state to the first mode state, in response to the received external input. When the application C is changed from the second mode state to the first mode state, the image display apparatus 100 may release a memory that was used in performing a rendering operation of the application C.

As another example, referring to FIG. 8D, when the image display apparatus 100 receives an external input of ending the "view detail" menu 810 of the "Hot Movie" application (e.g., an input of selecting a "return" menu 830) from the user, the image display apparatus 100 may determine that the "Hot Movie" application has a relatively low probability of being selected by the user. The image display apparatus 100 may change the "Hot Movie" application from the second mode state to the first mode state.

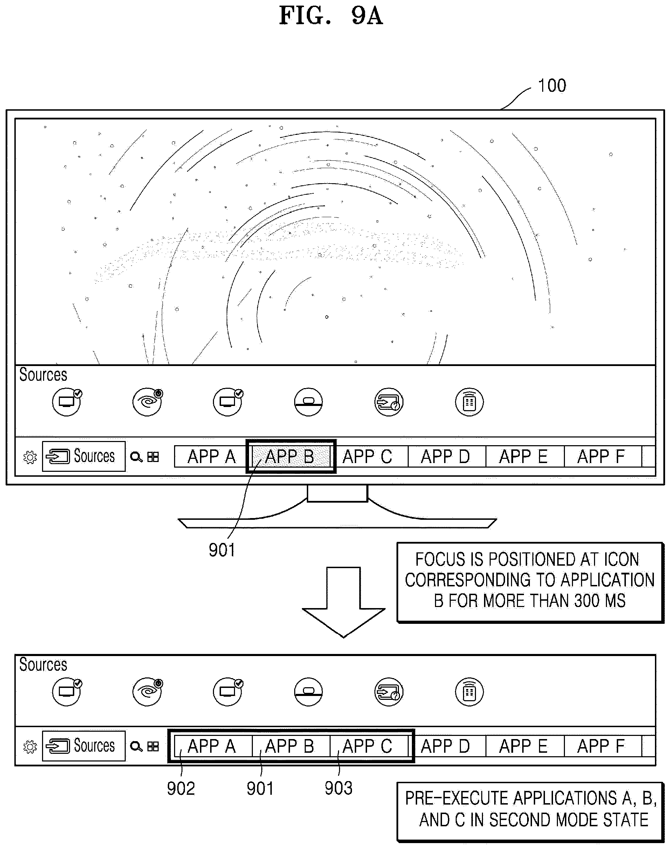

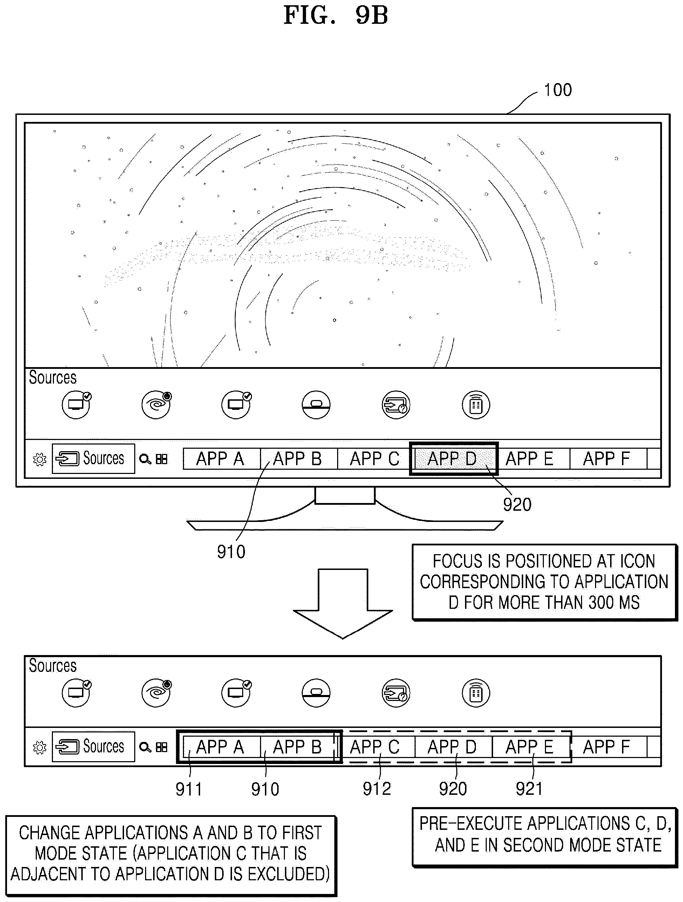

FIGS. 9A and 9B are diagrams illustrating a method of pre-executing a plurality of applications in a second mode state, according to an embodiment.

The image display apparatus 100 may pre-execute at least one application in the second mode state, the at least one application being from among one or more applications that were pre-executed in a first mode state. For example, in order to increase a possibility that a user-selected application is to be included in at least one application pre-executed in the second mode state, the image display apparatus 100 may pre-execute a plurality of applications in the second mode state.

For example, referring to FIG. 9A, when a focus is positioned at an icon 901 longer than a predetermined time (e.g., 300 milliseconds (ms)), the icon 901 corresponding to an application B, the image display apparatus 100 may change the application B to the second mode state. In this regard, the image display apparatus 100 may change not only the application B but also change applications A and C respectively corresponding to icons 902 and 903 that are adjacent to the icon 901 corresponding to the application B. Then, the image display apparatus 100 may pre-execute the applications A, B, and C in the second mode state.

When the image display apparatus 100 pre-executes the plurality of applications in the second mode state, the number of applications to be pre-executed in the second mode state may vary according to embodiments. For example, as illustrated in FIG. 9A, the application B corresponding to the icon 901 at which the focus is positioned, and the applications A and C respectively corresponding to the icons 902 and 903 that are adjacent to the icon 901 may be pre-executed in the second mode state. As another example, when icons are displayed in at least two columns, the image display apparatus 100 may pre-execute, in the second mode state, an application corresponding to an icon on which the focus is positioned, and applications corresponding to icons adjacent to the icon in up and down-right and left directions, but the present disclosure is not limited thereto.

When the focus is moved, the image display apparatus 100 may change an application to be pre-executed in the second mode state. For example, referring to FIG. 9B, the focus may be moved from an icon 910 corresponding to an application B to an icon 920 corresponding to an application D, and may be positioned at the icon 920 longer than a predetermined time (e.g., 300 ms), the icon 920 corresponding to the application D.

Then, the image display apparatus 100 may determine applications to be pre-executed in the second mode state, wherein the applications includes the application D corresponding to the icon 920 at which the focus is positioned, and applications C and E corresponding to icons 921 and 922 adjacent to the icon 920 at which the focus is positioned. In addition, because the focus has been moved, the application B has a relatively low probability of being selected by a user. The image display apparatus 100 may change the application B and applications A and C from the second mode state to the first mode state, wherein the applications A and C correspond to icons 911 and 912 adjacent to the icon 910 corresponding to the application B. In this regard, because the application C corresponds to the icon 912 that is also adjacent to the icon 920 corresponding to the application D, the image display apparatus 100 may change the applications A and B except for the application C to the first mode state.

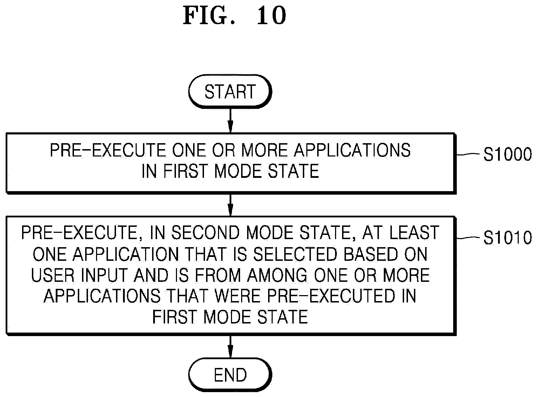

FIG. 10 is a flowchart of a method of operating the image display apparatus 100, according to an embodiment.

In operation S1000, the image display apparatus 100 pre-executes one or more applications in a first mode state by performing operations except for a rendering operation from among operations for executing the one or more applications.

The image display apparatus 100 sets the one or more pre-execution target applications to be in the first mode state. The image display apparatus 100 may divide states of the one or more pre-execution target applications into two modes. For example, the image display apparatus 100 may distinguish the first mode state in which operations except for the rendering operation from among the operations for executing the one or more applications are performed from the second mode state in which the rendering operation is performed. Then, the image display apparatus 100 may set an application to be in the second mode state, the application being selected based on a user input from among the one or more pre-execution target applications, and may perform the rendering operation only on the application set in the second mode state.

The image display apparatus 100 may determine one or more applications to be pre-executed from among a plurality of applications being executable in the image display apparatus 100, wherein the one or more applications are selected based on an order of displaying, on the display 350, icons corresponding to the applications or a frequency of use of each of the applications.

When the plurality of applications are set in the first mode state, the image display apparatus 100 may pre-execute the plurality of applications in the first mode state, based on a preset priority order. In this regard, the image display apparatus 100 may pre-execute the plurality of applications, which were set in the first mode state, in the first mode state, based on a user-preference order. Alternatively, in another embodiment, the image display apparatus 100 may pre-execute the plurality of applications, which were set in the first mode state, in the first mode state, based on an order of larger memory uses with respect to pre-execution in the first mode state.

The image display apparatus 100 may preset a limit to a memory use for pre-execution of an application, thereby preventing an excessive memory use in pre-execution of the application. When an application is currently being pre-executed in the first mode state, the image display apparatus 100 may discontinue the pre-execution in the first mode state, regardless of whether the pre-execution with respect to the application is completed or not. Alternatively, in another embodiment, the image display apparatus 100 may discontinue the pre-execution in the first mode state when the pre-execution with respect to the application is completed.

In operation S1010, the image display apparatus 100 may pre-execute at least one application in the second mode state in which the rendering operation is performed, the at least one application being selected, based on a user input, from among the one or more applications that were pre-executed in the first mode state. The image display apparatus 100 may change an application corresponding to an icon on which a focus is positioned for more than a predetermined time to the second mode state, the application being from among the one or more applications that were pre-executed in the first mode state. Alternatively, when the focus is positioned at an icon corresponding to a user-preferred application from among the one or more applications that were pre-executed in the first mode state, the image display apparatus 100 may change the user-preferred application to the second mode state.

The image display apparatus 100 may change some applications from among the one or more applications that were pre-executed in the first mode state to the second mode state. For example, the image display apparatus 100 may change not only the application corresponding to the icon on which the focus is positioned for more than a predetermined time but also change one or more applications respectively corresponding to one or more icons adjacent to the icon on which the focus is positioned for more than a predetermined time.

The image display apparatus 100 may receive an external input of selecting one of the at least one application pre-executed in the second mode state. Also, the image display apparatus 100 may output an execution screen of the selected application, based on a result of pre-executing the selected application in the second mode state.

The embodiments may be implemented as programmed commands to be executed in various computer units, and then may be recorded in a non-transitory computer-readable recording medium. The non-transitory computer-readable recording medium may include one or more of the programmed commands, data files, data structures, or the like. The programmed commands recorded to the non-transitory computer-readable recording medium may be particularly designed or configured for the present disclosure or may be well known to one of ordinary skill in the art. Examples of the non-transitory computer-readable recording medium include magnetic media including hard disks, floppy disks, and magnetic tapes, optical media including CD-ROMs and DVDs, magneto-optical media including floptical disks, and hardware designed to store and execute the programmed commands in ROM, RAM, a flash memory, and the like. Examples of the programmed commands include not only machine code generated by a compiler but also include a high-level programming language to be executed in a computer by using an interpreter.

It is obvious to one of ordinary skill in the art that the disclosure may be easily embodied in many different forms without changing the technical concept or essential features of the disclosure. Thus, it should be understood that the embodiments described herein should be considered in a descriptive sense only and not for purposes of limitation. For example, configuring elements that are singular forms may be executed in a distributed fashion, and also, configuring elements that are distributed may be combined and then executed.

## Claims

1. An image display apparatus (100) comprising:
a display (350);
a memory (220); and
a processor (210) configured to:
pre-execute an application stored in the memory (220) in a first state in which at least one operation other than a rendering operation among a plurality of operations of the application is executed, wherein the rendering operation is deactivated by setting a size of an output window for the application to a specific size which is less than a size of an execution screen for the application, and
in response to a user input selecting the application pre-executed in the first state, execute the application in a second state in which the rendering operation is activated by changing the size of the output window to the size of the execution screen for the application,
wherein the rendering operation comprises graphic processing for outputting the execution screen of the application.

2. The image display apparatus (100) of claim 1, wherein the processor (210) is further configured to change an application from the first state to the second state in response to an indicator being positioned on an icon corresponding to the application for longer than a predetermined time.

3. The image display apparatus (100) of claim 2, wherein the processor (210) is further configured to change a plurality of applications to the second state, the plurality of applications corresponding to a plurality of icons that are adjacent to the icon on which the indicator is positioned for longer than the predetermined time.

4. The image display apparatus (100) of claim 2, wherein the processor (210) is further configured to change the application from the second state to the first state in response to the indicator being moved from the icon corresponding to the application in the second state to another icon.

5. The image display apparatus (100) of claim 1, wherein the processor (210) is further configured to change a frequently used application to the second state in response to an indicator being positioned on an icon corresponding to the frequently used application from among the one or more applications that were pre-executed in the first state.

6. The image display apparatus (100) of claim 1, further comprising:
wherein the processor (210) is further configured to control a rendered graphic image to be output to the display, in response to an external input of selecting an application from among the at least one application pre-executed in the second state, wherein the rendered graphic image is obtained by executing the selected application in the second state.

7. The image display apparatus (100) of claim 6, wherein the processor (210) is further configured to:
control icons corresponding to a plurality of applications that are executable in the image display apparatus (100) to be displayed on the display (350), and
select, from among plurality of applications that are executable, a preset number of applications to be pre-executed in the first state, the preset number of applications being selected based on an order of displaying the icons on the display or a frequency of use of each of the plurality of applications that are executable.

8. The image display apparatus (100) of claim 1, wherein the processor (210) is further configured to:
perform monitoring with respect to a use state of the memory (220),
check whether the memory (220) is used more than a threshold value, and
when it is determined from the checking that the memory is used more than the threshold value, control the execution in the first state or the second state to be discontinued.

9. The image display apparatus (100) of claim 1, wherein the processor (210) is further configured to control, when a plurality of applications are set to be pre-executed in the first state, some applications from among the plurality of applications to be pre-executed in the first state, based on a preset priority order.

10. The image display apparatus (100) of claim 1, wherein:
deactivating the rendering operation in the first state includes setting a specific size of the output window to be 1x1, and
activating the rendering operation in the second state by changing the size of the output window includes setting the output window to 1920x1080.

11. A method of operating an image display apparatus (100), the method comprising:
pre-executing an application stored in the memory in a first state in which at least one operation other than a rendering operation among a plurality of operations of the application is executed, wherein the rendering operation is deactivated by setting a size of an output window for the application to a specific size which is less than a size of an execution screen for the application, and
in response to a user input selecting the application pre-executed in the first state, executing the application in a second state in which the rendering operation is activated by changing the size of the output window to the size of the execution screen for the application,
wherein the rendering operation comprises graphic processing for outputting the execution screen of the application.

12. The method of claim 11, wherein the execution in the second state comprises changing an application from the first state to the second state in response to an indicator being position on an icon corresponding to the application for longer than a predetermined time.

13. The method of claim 12, wherein the execution in the second state comprises changing a plurality of applications to the second state, wherein the plurality of applications respectively correspond to a plurality of icons that are adjacent to the icon on which the indicator is positioned for longer than the predetermined time.

14. The method of claim 11, wherein the pre-execution in the first state comprises deactivating the rendering operation by setting a size of a window to be output to a specific size, wherein the size of the window corresponds to a size of the execution screen of the application, and
wherein the execution in the second state comprises activating the rendering operation by changing the size of the window of the specific size.

15. A non-transitory computer-readable recording medium having recorded thereon a program for causing an electronic device to perform operations of:
pre-executing an application stored in the memory (220) in a first state in which at least one operation other than a rendering operation among a plurality of operations of the application is executed, wherein the rendering operation is deactivated by setting a size of an output window for the application to a specific size which is less than a size of an execution screen for the application, and
in response to a user input selecting the application pre-executed in the first state, executing the application in a second state in which the rendering operation is activated by changing the size of the output window to the size of the execution screen for the application,
wherein the rendering operation comprises graphic processing for outputting the execution screen of the application.

## Patentansprüche

1. Bildanzeigevorrichtung (100), umfassend:
eine Anzeige (350);
einen Speicher (220); und
einen Prozessor (210), der konfiguriert ist, um:
eine im Speicher (220) gespeicherte Anwendung in einem ersten Zustand vorab auszuführen, in dem mindestens ein anderer Vorgang als ein Rendering-Vorgang unter mehreren Vorgängen der Anwendung ausgeführt wird, wobei der Rendering-Vorgang deaktiviert wird, indem eine Größe eines Ausgabefensters für die Anwendung auf eine bestimmte Größe eingestellt wird, die kleiner ist als eine Größe eines Ausführungsbildschirms für die Anwendung, und
als Reaktion auf eine Benutzereingabe, die die im ersten Zustand vorab ausgeführte Anwendung auswählt, die Anwendung in einem zweiten Zustand auszuführen, in dem der Rendering-Vorgang aktiviert wird, indem die Größe des Ausgabefensters auf die Größe des Ausführungsbildschirms für die Anwendung geändert wird, wobei der Rendering-Vorgang eine Grafikverarbeitung zum Ausgeben des Ausführungsbildschirms der Anwendung umfasst.

2. Bildanzeigevorrichtung (100) nach Anspruch 1, wobei der Prozessor (210) ferner konfiguriert ist, um eine Anwendung als Reaktion darauf, dass ein Zeiger länger als eine vorbestimmte Zeit auf einem der Anwendung entsprechenden Symbol positioniert ist, von dem ersten Zustand in den zweiten Zustand zu ändern.

3. Bildanzeigevorrichtung (100) nach Anspruch 2, wobei der Prozessor (210) ferner so konfiguriert ist, dass er eine Vielzahl von Anwendungen in den zweiten Zustand versetzt, wobei die Vielzahl von Anwendungen einer Vielzahl von Symbolen entspricht, die länger als die vorbestimmte Zeit an das Symbol angrenzen, auf dem der Zeiger positioniert ist.

4. Bildanzeigevorrichtung (100) nach Anspruch 2, wobei der Prozessor (210) ferner konfiguriert ist, um die Anwendung als Reaktion darauf, dass der Zeiger von dem Symbol, das der Anwendung im zweiten Zustand entspricht, zu einem anderen Symbol bewegt wird, von dem zweiten Zustand in den ersten Zustand zu ändern.

5. Bildanzeigevorrichtung (100) nach Anspruch 1, wobei der Prozessor (210) ferner konfiguriert ist, um eine häufig verwendete Anwendung als Reaktion darauf, dass ein Zeiger auf einem Symbol positioniert wird, das der häufig verwendeten Anwendung aus der einen oder mehreren Anwendungen entspricht, die im ersten Zustand vorab ausgeführt wurden, in den zweiten Zustand zu ändern.

6. Bildanzeigevorrichtung (100) nach Anspruch 1, ferner umfassend:
wobei der Prozessor (210) ferner dafür konfiguriert ist, als Reaktion auf eine externe Eingabe zum Auswählen einer Anwendung aus der mindestens einen im zweiten Zustand vorab ausgeführten Anwendung ein gerendertes Grafikbild zu steuern, das an die Anzeige ausgegeben werden soll, wobei das gerenderte Grafikbild durch Ausführen der ausgewählten Anwendung im zweiten Zustand erhalten wird.

7. Bildanzeigevorrichtung (100) nach Anspruch 6, wobei der Prozessor (210) ferner konfiguriert ist, um:
Symbole zu steuern, die einer Vielzahl von Anwendungen entsprechen, die in der Bildanzeigevorrichtung (100) ausführbar sind, um auf der Anzeige (350) anzuzeigen, und
aus einer Vielzahl von Anwendungen, die ausführbar sind, eine voreingestellte Anzahl von Anwendungen auszuwählen, die im ersten Zustand vorab ausgeführt werden sollen, wobei die voreingestellte Anzahl von Anwendungen basierend auf einer Anzeigereihenfolge der Symbole auf der Anzeige oder einer Verwendungshäufigkeit jeder der mehreren ausführbaren Anwendungen ausgewählt wird.

8. Bildanzeigevorrichtung (100) nach Anspruch 1, wobei der Prozessor (210) ferner konfiguriert ist, um:
Überwachung in Bezug auf einen Verwendungszustand des Speichers (220) durchzuführen,
zu überprüfen, ob der Speicher (220) mehr als ein Schwellenwert verwendet wird, und
wenn aus der Überprüfung bestimmt wird, dass der Speicher mehr als der Schwellenwert verwendet wird, das Ausführen in dem ersten Zustand oder dem zweiten Zustand zu steuern, um unterbrochen zu werden.

9. Bildanzeigevorrichtung (100) nach Anspruch 1, wobei der Prozessor (210) ferner dazu konfiguriert ist, wenn eine Vielzahl von Anwendungen so eingestellt sind, dass sie im ersten Zustand vorab ausgeführt werden, einige Anwendungen aus der Vielzahl von Anwendungen, die im ersten Zustand vorab ausgeführt werden sollen, basierend auf einer voreingestellten Prioritätsreihenfolge zu steuern.

10. Bildanzeigevorrichtung (100) nach Anspruch 1, wobei:
das Deaktivieren des Rendering-Vorgangs im ersten Zustand das Einstellen einer bestimmten Größe des Ausgabefensters auf 1x1 umfasst, und
das Aktivieren des Rendering-Vorgangs im zweiten Zustand durch Ändern der Größe des Ausgabefensters das Einstellen des Ausgabefensters auf 1920x1080 umfasst.

11. Verfahren zum Betreiben einer Bildanzeigevorrichtung (100), wobei das Verfahren Folgendes umfasst:
Vorab-Ausführen einer im Speicher gespeicherten Anwendung in einem ersten Zustand, in dem mindestens ein anderer Vorgang als ein Rendering-Vorgang unter mehreren Vorgängen der Anwendung ausgeführt wird, wobei die Aufbereitungsoperation deaktiviert wird, indem eine Größe eines Ausgabefensters für die Anwendung auf eine bestimmte Größe eingestellt wird, die kleiner ist als eine Größe eines Ausführungsbildschirms für die Anwendung, und
als Reaktion auf eine Benutzereingabe, die die im ersten Zustand vorab ausgeführte Anwendung auswählt, Ausführen der Anwendung in einem zweiten Zustand, in dem der Rendering-Vorgang aktiviert wird, indem die Größe des Ausgabefensters auf die Größe des Ausführungsbildschirms für die Anwendung geändert wird, wobei der Rendering-Vorgang eine Grafikverarbeitung zum Ausgeben des Ausführungsbildschirms der Anwendung umfasst.

12. Verfahren nach Anspruch 11, wobei das Ausführen im zweiten Zustand als Reaktion darauf, dass ein Zeiger länger als eine vorbestimmte Zeit auf einem Symbol positioniert ist, das der Anwendung entspricht, das Wechseln einer Anwendung vom ersten Zustand in den zweiten Zustand umfasst.

13. Verfahren nach Anspruch 12, wobei das Ausführen im zweiten Zustand das Wechseln einer Vielzahl von Anwendungen in den zweiten Zustand umfasst, wobei die Vielzahl von Anwendungen jeweils einer Vielzahl von Symbolen entsprechen, die an das Symbol angrenzen, auf dem der Zeiger länger als die vorbestimmte Zeit positioniert ist.

14. Verfahren nach Anspruch 11, wobei das Vorab-Ausführen im ersten Zustand das Deaktivieren der Aufbereitungsoperation durch Einstellen einer Größe eines auszugebenden Fensters auf eine bestimmte Größe umfasst, wobei die Größe des Fensters einer Größe des Ausführungsbildschirms der Anwendung entspricht, und wobei das Ausführen im zweiten Zustand das Aktivieren des Rendering-Vorgangs durch Ändern der Größe des Fensters der spezifischen Größe umfasst.

15. Nicht flüchtiges computerlesbares Aufzeichnungsmedium, auf dem ein Programm aufgezeichnet ist, um eine elektronische Vorrichtung zu veranlassen, folgende Vorgänge auszuführen:
Vorab-Ausführen einer im Speicher (220) gespeicherten Anwendung in einem ersten Zustand, in dem mindestens ein anderer Vorgang als ein Rendering-Vorgang unter mehreren Vorgängen der Anwendung ausgeführt wird, wobei der Rendering-Vorgang deaktiviert wird, indem eine Größe eines Ausgabefensters für die Anwendung auf eine bestimmte Größe eingestellt wird, die kleiner ist als eine Größe eines Ausführungsbildschirms für die Anwendung, und
als Reaktion auf eine Benutzereingabe, die die im ersten Zustand vorab ausgeführte Anwendung auswählt, Ausführen der Anwendung in einem zweiten Zustand, in dem der Rendering-Vorgang aktiviert wird, indem die Größe des Ausgabefensters auf die Größe des Ausführungsbildschirms für die Anwendung geändert wird, wobei der Rendering-Vorgang eine Grafikverarbeitung zum Ausgeben des Ausführungsbildschirms der Anwendung umfasst.

## Revendications

1. Appareil d'affichage d'image (100) comprenant :
un dispositif d'affichage (350) ;
une mémoire (220) ; et
un processeur (210) conçu pour :
pré-exécuter une application stockée dans la mémoire (220) dans un premier état dans lequel au moins une opération autre qu'une opération de rendu parmi une pluralité d'opérations de l'application est exécutée, dans lequel l'opération de rendu est désactivée en définissant une taille d'une fenêtre de sortie pour l'application sur une taille spécifique qui est inférieure à une taille d'un écran d'exécution pour l'application, et
en réponse à une entrée utilisateur sélectionnant l'application pré-exécutée dans le premier état, exécuter l'application dans un second état dans lequel l'opération de rendu est activée en modifiant la taille de la fenêtre de sortie en la taille de l'écran d'exécution pour l'application,
dans lequel l'opération de rendu comprend un traitement graphique pour délivrer en sortie l'écran d'exécution de l'application.

2. Appareil d'affichage d'image (100) selon la revendication 1, dans lequel le processeur (210) est en outre conçu pour faire passer une application du premier état au second état en réponse à un indicateur étant positionné sur une icône correspondant à l'application pendant une durée supérieure à une durée prédéterminée.

3. Appareil d'affichage d'image (100) selon la revendication 2, dans lequel le processeur (210) est en outre conçu pour faire passer une pluralité d'applications au second état, la pluralité d'applications correspondant à une pluralité d'icônes qui sont adjacentes à l'icône sur laquelle l'indicateur est positionné pendant une durée supérieure à la durée prédéterminée.

4. Appareil d'affichage d'image (100) selon la revendication 2, dans lequel le processeur (210) est en outre conçu pour faire passer l'application du second état au premier état en réponse à l'indicateur étant déplacé de l'icône correspondant à l'application dans le second état à une autre icône.

5. Appareil d'affichage d'image (100) selon la revendication 1, dans lequel le processeur (210) est en outre conçu pour faire passer une application fréquemment utilisée au second état en réponse à un indicateur étant positionné sur une icône correspondant à l'application fréquemment utilisée parmi les une ou plusieurs applications qui ont été pré-exécutées dans le premier état.

6. Appareil d'affichage d'image (100) selon la revendication 1, comprenant en outre :
dans lequel le processeur (210) est en outre conçu pour commander une image graphique rendue à délivrer en sortie sur le dispositif d'affichage, en réponse à une entrée externe de sélection d'une application parmi l'au moins une application pré-exécutée dans le second état, dans lequel l'image graphique rendue est obtenue en exécutant l'application sélectionnée dans le second état.

7. Appareil d'affichage d'image (100) selon la revendication 6, dans lequel le processeur (210) est en outre conçu pour :
commander des icônes correspondant à une pluralité d'applications qui sont exécutables dans l'appareil d'affichage d'image (100) pour être affichées sur le dispositif d'affichage (350), et
sélectionner, parmi une pluralité d'applications qui sont exécutables, un nombre prédéfini d'applications à pré-exécuter dans le premier état, le nombre prédéfini d'applications étant sélectionné sur la base d'un ordre d'affichage des icônes sur le dispositif d'affichage ou d'une fréquence d'utilisation de chacune de la pluralité d'applications qui sont exécutables.

8. Appareil d'affichage d'image (100) selon la revendication 1, dans lequel le processeur (210) est en outre conçu pour :
effectuer une surveillance par rapport à un état d'utilisation de la mémoire (220),
vérifier si la mémoire (220) est utilisée à une valeur supérieure à une valeur seuil, et
lorsqu'il est déterminé à partir de la vérification que la mémoire est utilisée à une valeur supérieure à la valeur seuil, commander l'exécution dans le premier état ou le second état à interrompre.

9. Appareil d'affichage d'image (100) selon la revendication 1, dans lequel le processeur (210) est en outre conçu pour commander, lorsqu'une pluralité d'applications sont définies pour être pré-exécutées dans le premier état, certaines applications parmi la pluralité d'applications à pré-exécuter dans le premier état, sur la base d'un ordre de priorité prédéfini.

10. Appareil d'affichage d'image (100) selon la revendication 1, dans lequel :
la désactivation de l'opération de rendu dans le premier état comporte la définition d'une taille spécifique de la fenêtre de sortie sur 1×1, et
l'activation de l'opération de rendu dans le second état en modifiant la taille de la fenêtre de sortie comporte la définition de la fenêtre de sortie sur 1920x1080.

11. Procédé d'exploitation d'un appareil d'affichage d'image (100), le procédé comprenant :
la pré-exécution d'une application stockée dans la mémoire dans un premier état dans lequel au moins une opération autre qu'une opération de rendu parmi une pluralité d'opérations de l'application est exécutée, dans lequel l'opération de rendu est désactivée en définissant une taille d'une fenêtre de sortie pour l'application sur une taille spécifique qui est inférieure à une taille d'un écran d'exécution pour l'application, et
en réponse à une entrée utilisateur sélectionnant l'application pré-exécutée dans le premier état, l'exécution de l'application dans un second état dans lequel l'opération de rendu est activée en modifiant la taille de la fenêtre de sortie en la taille de l'écran d'exécution pour l'application,
dans lequel l'opération de rendu comprend un traitement graphique pour délivrer en sortie l'écran d'exécution de l'application.

12. Procédé selon la revendication 11, dans lequel l'exécution dans le second état comprend le passage d'une application du premier état au second état en réponse à un indicateur étant positionné sur une icône correspondant à l'application pendant une durée supérieure à une durée prédéterminée.

13. Procédé selon la revendication 12, dans lequel l'exécution dans le second état comprend le passage d'une pluralité d'applications au second état, dans lequel la pluralité d'applications correspondent respectivement à une pluralité d'icônes qui sont adjacentes à l'icône sur laquelle l'indicateur est positionné pendant une durée supérieure à une durée prédéterminée.

14. Procédé selon la revendication 11, dans lequel la pré-exécution dans le premier état comprend la désactivation de l'opération de rendu en définissant une taille d'une fenêtre à délivrer en sortie sur une taille spécifique, dans lequel la taille de la fenêtre correspond à une taille de l'écran d'exécution de l'application, et
dans lequel l'exécution dans le second état comprend l'activation de l'opération de rendu en modifiant la taille de la fenêtre de la taille spécifique.

15. Support d'enregistrement non transitoire lisible par ordinateur sur lequel est enregistré un programme pour amener un dispositif électronique à effectuer des opérations :
de pré-exécution d'une application stockée dans la mémoire (220) dans un premier état dans lequel au moins une opération autre qu'une opération de rendu parmi une pluralité d'opérations de l'application est exécutée, dans lequel l'opération de rendu est désactivée en définissant une taille d'une fenêtre de sortie pour l'application sur une taille spécifique qui est inférieure à une taille d'un écran d'exécution pour l'application, et
en réponse à une entrée utilisateur sélectionnant l'application pré-exécutée dans le premier état, d'exécution de l'application dans un second état dans lequel l'opération de rendu est activée en modifiant la taille de la fenêtre de sortie en la taille de l'écran d'exécution pour l'application,
dans lequel l'opération de rendu comprend un traitement graphique pour délivrer en sortie l'écran d'exécution de l'application.
